# EUROPEAN PATENT SPECIFICATION

(11) **EP 3 349 312 B1**
(45) Date of publication and mention of the grant of the patent: **06.03.2024**
(21) Application number: 18150919.1
(22) Date of filing: 10.01.2018
(51) Int. Cl.: H01R 43/02, H01R 4/02

(54) **FIXING APPARATUS**
BEFESTIGUNGSVORRICHTUNG
APPAREIL DE FIXATION

(30) Priority: 13.01.2017 CN 201710024186
(43) Date of publication of application: 18.07.2018
(73) Proprietor: Tyco Electronics (Shanghai) Co. Ltd., Shanghai (CN); Measurement Specialties (Chengdu) Ltd, Chendu Sichuan (CN); TE Connectivity Solutions GmbH, 8200 Schaffhausen (CH)
(72) Inventor: DENG, Yingcong, Shanghai (CN); GONG, Lan, Shanghai (CN); YING, Qian, Shanghai (CN); ZHANG, Dandan, Shanghai (CN); HU, Lvhai, Shanghai (CN); LIU, Yun, Shanghai (CN); YE, Lin, Shanghai (CN); YAN, Yong, Shanghai (CN); LU, Roberto Francisco-Yi, Shanghai (CN); ZENG, Qinglong, Shanghai (CN)
(74) Representative: Grünecker Patent- und Rechtsanwälte PartG mbB

(56) References cited:
- CN-A- 103 401 104
- DE-A1-102014 226 062
- US-A1- 2011 287 657
- US-A1- 2015 194 236
- US-B1- 6 189 769

## Description

### BACKGROUND OF THE INVENTION

### Field of the Invention

Embodiments of the disclosure relate to a fixing apparatus, and in particularly to a fixing apparatus adapted to fix an elongated element.

### Description of the Related Art

In the field of electronics manufacturing technique, an elongated element is often required to be accurately positioned and fixed. For example, in the prior art, it is often necessary to solder an elongated wire to a needle-shaped pin of an electronic device. In order to ensure the soldering accuracy, the wire and the pin of the electronic device need to be accurately positioned and fixed at a predetermined position so that the axes of the wire and the pin are accurately aligned with each other.

Currently, in the prior art, there is no such fixing apparatus adapted to accurately position and fix such elongated member. Therefore, in the prior art, the elongated member is usually manually positioned and fixed, which undoubtedly reduces the soldering accuracy, thereby reducing the quality of a welded product.

US 2011/0287657 A1 discloses an electric wire connector that includes a lower connector part formed in a shape extending in a first direction. The lower connector is opened at the top and is provided with insulation displacement contacts for positioning and contacting a wire. The wires are pressed into the slots of the insulation displacement contacts by a top connector part pivotally connected to the lower connector part.

CN 103 401 104 A discloses an alternating current charging socket with a power-off upon cover opening function. The alternating current charging socket comprises a base body, a cover body hinged to the base body, and an alternating current charging switch, wherein a hinging part is arranged on the cover body. The alternating current charging switch is arranged at the hinging position of the base body and the cover body. The hinging part pushes the alternating current charging switch.

### SUMMARY OF THE INVENTION

Embodiments of the disclosure have been made to overcome or alleviate at least one aspect of the above mentioned disadvantages. The invention is as defined in claim 1.

The disclosure provides a fixing apparatus adapted to precisely position and reliably fix an elongated element.

According to an exemplary embodiment of the disclosure, the lock is formed with a locking lip at an upper end thereof and adapted to locked an edge portion of the first pressing cover.

According to still another exemplary embodiment of the disclosure, when the lock is applied with a driving force against a thrust of the first spring at the lower end thereof, the lock overcomes the thrust of the first spring to be rotated from the locked position to the unlocked position to disengage the lock from the first pressing cover.

According to further another exemplary embodiment of the disclosure, the fixing apparatus further comprises: a mounting base on which the first fixing device and the second fixing device are fixedly mounted; and an unlocking device slidably mounted on the mounting base. The unlocking device is formed with at least one pressing protrusion adapted to push the lower end of the locking device to drive the locking device to be rotated from the locked position to the unlocked position.

According to yet another exemplary embodiment of the disclosure, the unlocking device comprises a strip-shaped body on which the pressing protrusion is formed, and the mounting base is formed with a receiving groove into which the strip-shaped body of the unlocking device is slidably received.

According to still another exemplary embodiment of the disclosure, one of the strip-shaped body and the mounting base is formed with a sliding slot, and the other is provided with a support column, and the support column is received in the sliding slot so that the strip-shaped body is slidable back and forth along the sliding slot relative to the mounting base.

According to further another exemplary embodiment of the disclosure, the unlocking device further comprises a pushing portion formed on one end of the strip-shaped body, and when the pushing portion is applied with the driving force against the thrust of the first spring, the pushing protrusion of the unlocking device is moved toward the corresponding lock to drive the lock to be rotated from the locked position to the unlocked position.

According to yet another exemplary embodiment of the disclosure, the strip-shaped body is provided with a second spring at the other end thereof, one end of which is pressed against the other end of the strip-shaped body, and when the driving force applied to the pushing portion is released, the pressing protrusion of the unlocking device is driven by the second spring to move away from the corresponding lock, so that the pressing protrusion of the unlocking device is automatically reset to an initial state in which the pressing protrusion is separated from the corresponding lock .

According to still another exemplary embodiment of the disclosure, the second fixing device comprises: a second fixing base in which the second positioning groove is formed; and a second pressing cover pivotally connected to the second fixing base and adapted to be rotated between an open state and a closed state, wherein the second pressing cover is adapted to press the second elongated element in the second positioning groove when being in the closed state.

According to further another exemplary embodiment of the disclosure, the second pressing cover is formed with a handle portion on a top surface thereof, by which the second pressing cover is opened and closed.

According to yet another exemplary embodiment of the disclosure, the fixing apparatus further comprising: a plurality of first fixing devices arranged in a row to allow a plurality of first elongate element to be simultaneously positioned and fixed; and a single second fixing device having a second fixing base in which a row of the second positioning grooves are formed to allow a plurality of second elongated elements to be simultaneously positioned and fixed.

According to still another exemplary embodiment of the disclosure, the first elongated element comprises a wire, and the first positioning groove further comprises a conductor positioning groove adapted to position a conductor of the wire.

According to further another exemplary embodiment of the disclosure, the second elongated element comprises a needle-shaped pin of an electronic device adapted to be soldered with the conductor of the wire.

In the above-described various embodiments of the disclosure, the elongated element may be accurately positioned in the positioning groove of the fixing base and reliably pressed and held in the positioning groove by the pressing cover, thereby improving positioning accuracy and reliability of the elongated element.

Other objects and advantages of the disclosure will become apparent from the following description of the disclosure when taken in conjunction with the accompanying drawings, and may give a comprehensive understanding of the disclosure.

### BRIEF DESCRIPTION OF THE DRAWINGS

The above and other features of the disclosure will become more apparent by describing in detail exemplary embodiments thereof with reference to the accompanying drawings, in which:
FIG 1 shows a schematic perspective view of a fixing apparatus according to an example embodiment of the disclosure;
FIG 2 shows a schematic perspective view of a first fixing device of the fixing apparatus shown in FIG 1 with a first pressing cover being in an open state;
FIG 3 shows a plan view of the first fixing device of the fixing apparatus shown in FIG 1 with the first pressing cover being in a closed state;
FIG 4 shows a cross-sectional view of the first fixing device shown in FIG 3 taken along the line D-D of FIG 3 with the first pressing cover being in the closed position and a lock being in a locked position;
FIG 5 shows a longitudinal cross-sectional view of the fixing apparatus shown in FIG 1 with the first pressing cover being in the closed position, the lock being in the locked position and a unlocking device being in an initial position and separated from the lock,
FIG 6 shows a longitudinal cross-sectional view of the fixing apparatus shown in FIG 1 with the first pressing cover being in the open state, the lock being in a unlocked position and the unlocked device being in a driven state and in contact with the lock;
FIG 7 shows a schematic perspective view of a second fixing device of the fixing apparatus shown in Fig. 1 with a second pressing cover being in a closed state; and
FIG 8 shows a perspective view of the second fixing device of the fixing apparatus shown in FIG 1 with the second pressing cover being in an open state.

### DETAILED DESCRIPTION OF PREFERRED EMBODIMENTS OF THE INVENTION

The technical solution of the disclosure will be described hereinafter in further detail with reference to the following embodiments, taken in conjunction with the accompanying drawings. In the specification, the same or similar reference numerals indicate the same or similar parts. The description of the embodiments of the disclosure hereinafter with reference to the accompanying drawings is intended to explain the general inventive concept of the disclosure and should not be construed as a limitation on the disclosure.

In addition, in the following detailed description, for the sake of explanation, numerous specific details are set forth in order to provide a thorough understanding of the disclosed embodiments. It will be apparent, however, that one or more embodiments may also be practiced without these specific details. In other instances, well-known structures and devices are illustrated schematically in order to simplify the drawing.

According to a general technical concept of the disclosure, there is provided a fixing device comprising: a first fixing device adapted to position and fix at least one first elongated element; and a second fixing device adapted to position and fix at least one second elongated element. The first fixing device is formed with at least one first positioning groove adapted to position the first elongated element, and the second fixing device is formed with at least one second positioning groove adapted to position the second elongated element. Each first positioning groove is aligned with a corresponding second positioning groove, so that the first elongated element fixed in the first positioning groove is axially aligned with the second elongated element fixed in the corresponding second positioning groove.

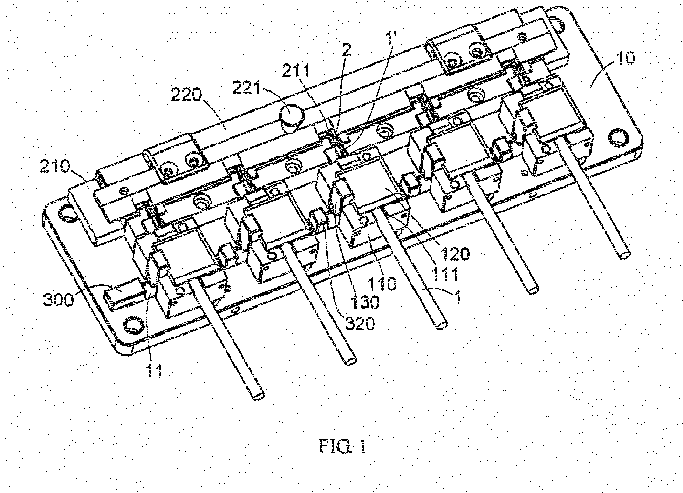

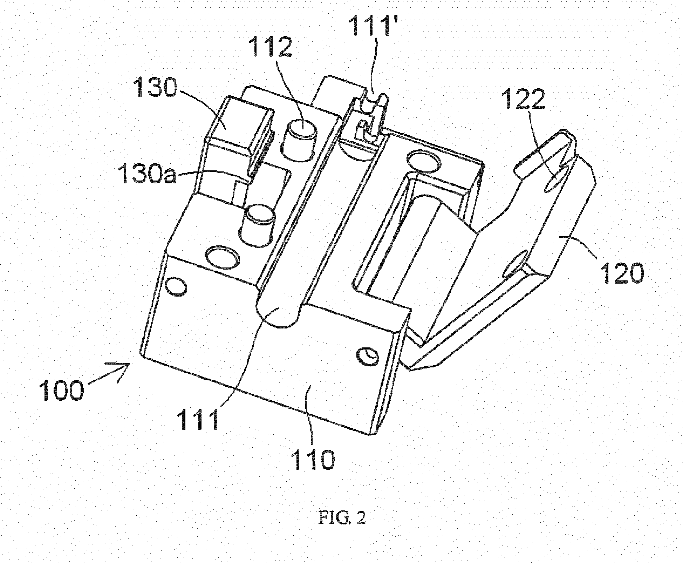

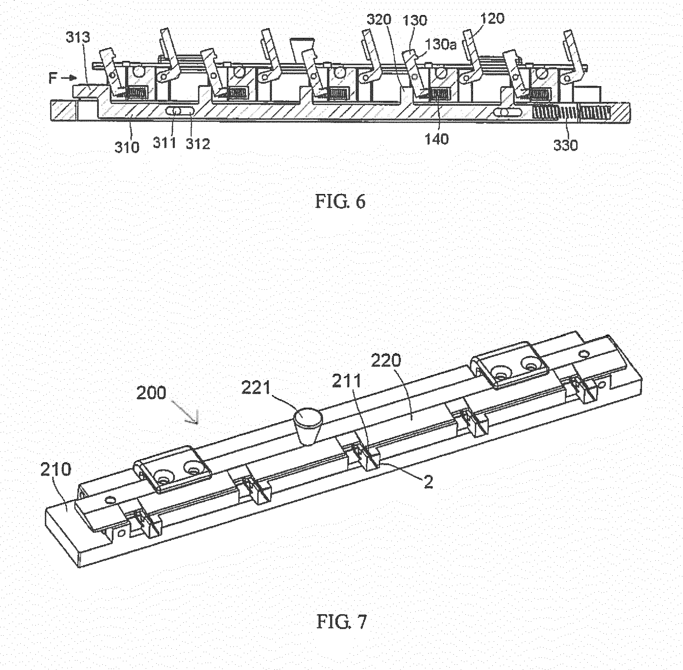

FIG 1 shows a perspective view of a fixing apparatus according to an exemplary embodiment of the disclosure; FIG 2 shows a perspective view of a first fixing device 100 of the fixing apparatus shown in FIG 1 with a first pressing cover 120 being in an open state; FIG 7 shows a perspective view of a second fixing device 200 of the fixing apparatus shown in FIG 1 with a second pressing cover 220 being in a closed state.

As shown in FIGS. 1, 2 and 7, in the illustrated embodiment, the fixing apparatus mainly comprises a first fixing device 100 and a second fixing device 200. The first fixing device 100 is adapted to position and fix at least one first elongated element 1. The second fixing device 200 is adapted to position and fix at least one second elongated element 2. In Fig. 1, five first elongated elements 1 and five second elongated element 2 are shown.

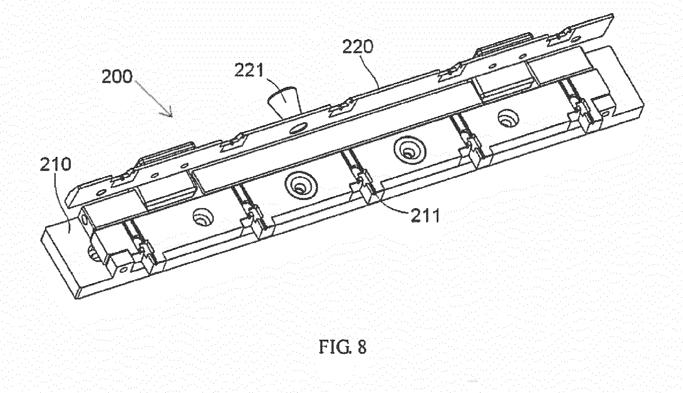

FIG 8 shows a perspective view of the second fixing device 200 of the fixing apparatus shown in FIG 1 with the second pressing cover 220 being in an open state.

As shown in FIGS. 2 and 8, in the illustrated embodiment, the first fixing device 100 is formed with at least one first positioning groove 111 adapted to position the first elongated element 1. The second fixing device 200 is formed with at least one second positioning groove 211 adapted to position the second elongated element 2.

As shown in FIG 1, in the illustrated embodiment, the first positioning groove 111 is aligned with a corresponded second positioning groove 211, so that the first elongated element 1 fixed in the first positioning groove 111 is axially aligned with the second elongated element 2 positioned in the corresponding second positioning groove 211. In this way, the first elongated elements 1 and the second elongated element 2 may be electrically connected with each other, for example, welded together.

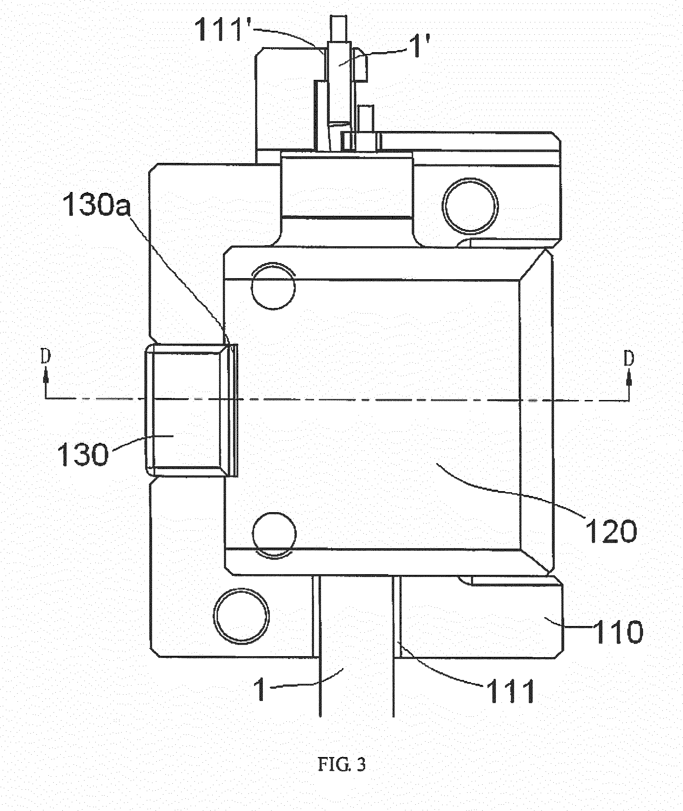

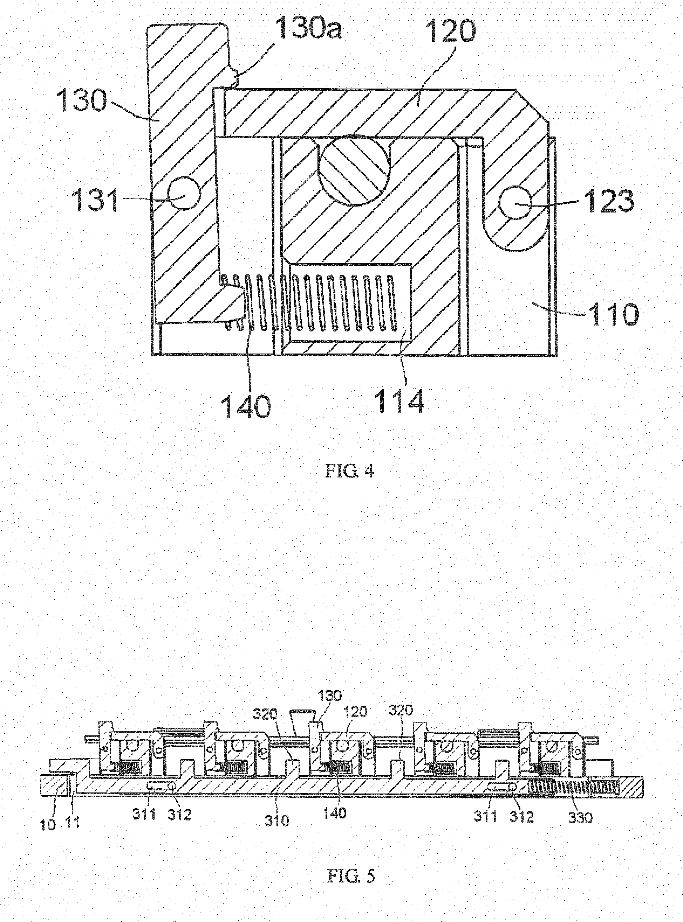

Fig. 3 shows a plan view of the first fixing device 100 of the fixing apparatus shown in Fig. 1 with the first pressing cover 120 being in a closed state; Fig. 4 shows a cross-section view of the first fixing device 100 shown in Fig. 3 taken along the line D-D with the first pressing cover 120 being in the closed state and a lock 130 being in a locked position.

As shown in FIGS. 2, 3 and 4, in the illustrated embodiment, the first fixing device mainly comprises a first fixing base 110, a first pressing cover 120 and a lock 130. The first positioning groove 111 is formed in the first fixing base 110. The first pressing cover120 is pivotally connected to a side of the first fixing base 110 by a pivot shaft 123 and adapted to be rotatable between the open state and the closed state. The lock 130 is pivotally connected to the other side of the first fixing base 110 by a pivot shaft 131 and adapted to be rotatable between a locked position and an unlocked position.

As shown in FIGS. 3 and 4, in the illustrated embodiment, the first pressing cover 120 is adapted to hold the first elongated element 1 in the first positioning groove 111 when being in the closed state.

As shown in FIGS. 3 and 4, in the illustrated embodiment, the lock 130 is adapted to lock the first pressing cover 120 in the closed state when being in the locked position.

As shown in FIGS. 2 and 4, in the illustrated embodiment, the lock 130 is formed with a locking lip 130a protruding onto a top of the first pressing cover 120 from an upper end the lock and adapted to lock an edge portion of the first pressing cover 120, so that the first pressing cover 120 is held in the closed state.

As shown in FIG 4, in the illustrated embodiment, the lock 130 has a connection portion, which is pivotally connected to the first fixing base 110 by the pivot shaft 131, between upper and lower ends thereof.

As shown in FIG 4, in the illustrated embodiment, the first fixing base 110 is formed with a spring receiving chamber 114 in which a first spring 140 is received. The first spring 140 is pressed against the lower end of the lock 130 at one end thereof to hold the lock 130 in the lock position.

FIG 6 shows a longitudinal cross-section view of the fixing apparatus shown in FIG 1 with the first pressing cover 120 being in the open state, the lock 130 being in the unlocked position, and an unlocking device 300 being in a driven state and in contact with the lock 130.

As shown in FIGS. 4 and 6, in the illustrated embodiment, when the lock 130 is applied with a driving force F against a thrust of the first spring 140 at the lower end thereof, the lock 130 may overcome the thrust to be rotated from the locked position to the unlocked position to disengage the lock 130 from the first pressing cover 120.

FIG 5 shows a longitudinal cross-section view of the fixing apparatus shown in FIG 1 with the first pressing cover 120 being in the closed state, the lock 130 being in the locked position and the unlocking device 300 being in an initial state and separated from the lock 130.

As shown in FIGS. 1 5 and 6, in the illustrated embodiment, the fixing apparatus further comprises a mounting base 10 and the unlocking device 300. The first fixing device 100 and the second fixing device 200 are fixedly mounted on the mounting base 10. The unlocking device 300 is slidably mounted on the mounting base 10.

As shown in FIGS. 5 and 6, in the illustrated embodiment, the unlocking device 300 is formed with a pressing protrusion 320 adapted to push the lower end of the locking device 130 to drive the locking device 130 to be rotated from the locked position to the unlocked position.

As shown in FIGS. 5 and 6, in the illustrated embodiment, the unlocking device 300 comprises a strip-shaped body 310 on which the pressing protrusion 320 is formed. The mounting base 10 is formed with a receiving groove 11 into which the strip-shaped body 310 of the unlocking device 300 is received.

As shown in FIGS. 5 and 6, in the illustrated embodiment, one of the strip-shaped body 310 and the mounting base 10 is formed with a sliding slot 312, and the other is provided with a support column 311 received in the sliding slot 312 so that the strip-shaped body 310 is slidable back and forth along the sliding slot 312 relative to the mounting base 10. For example, the sliding slot 312 is formed in the strip-shaped body 310, and the support column 311 is formed on the mounting base 10 and inserted in the sliding slot 312.

As shown in FIGS. 5 and 6, in the illustrated embodiment, the unlocking device 300 further comprises a pushing portion 313 formed on one end of the strip-shaped body 310.

As shown in FIG 6, in the illustrated embodiment, when the pushing portion 313 is applied with the driving force F against the thrust of the first spring 140, the pushing protrusion 320 of the unlocking device 300 is moved toward the corresponding lock 130 to drive the lock 130 to be rotated from the locked position to the unlocked position.

The strip-shaped body 310 is provided with a second spring 330 at the other end thereof, one end of which is pressed against the other end of the strip-shaped body 310.

As shown in FIG 5, in the illustrated embodiment, when the driving force F exerted on the pushing portion 313 is released, the pressing protrusion 320 of the unlocking device 300 is driven by the second spring 330 to move away from the corresponding lock 130, so that the pressing protrusion 320 of the unlocking device 300 is automatically reset to an initial state in which the pressing protrusion 320 is separated from the corresponding lock 130. In this way, the locking device 130 is driven by the first spring 140 to be rotated from the unlocked position to the locked position.

As shown in FIG 7 and FIG 8, in the illustrated embodiment, the second fixing device 200 mainly comprises a second fixing base 210 and a second pressing cover 220. The second positioning groove 211 is formed in the second fixing base 210. The second pressing cover 220 is pivotally connected to the second fixing base 210 and adapted to be rotated between an open state and a closed state.

As shown in FIG 1, in the illustrated embodiment, the second pressing cover 220 is adapted to press the second elongated element 2 in the second positioning groove 211 when being in the closed state.

As shown in FIGS. 1, 7, and 8, in the illustrated embodiment, the second pressing cover 220 is formed with a handle portion 221 on a top surface thereof, by which the second pressing cover 220 may be opened and closed.

As shown in FIG 1 and FIG 2, in the illustrated embodiment, the fixing apparatus may comprise a plurality of first fixing devices 100 arranged in a row to allow a plurality of first elongate element 1 to be simultaneously positioned and fixed.

As shown in FIGS. 1, 7 and 8, in the illustrated embodiment, the fixing apparatus may comprise a single second fixing device 200 having a second fixing base 210 in which a row of the second positioning grooves 211 are formed to allow a plurality of second elongated elements 2 to be simultaneously positioned and fixed.

In an exemplary embodiment of the disclosure, as shown in FIG 2, the first elongated element 1 may include a wire, and the first positioning groove 111 may further include a conductor positioning groove 111' adapted to position a conductor 1' of the wire 1.

In an exemplary embodiment of the disclosure, as shown in FIG 1, the second elongated element 2 may include a needle-shaped pin of an electronic device adapted to be soldered with the conductor 1' of the wire 1.

It should be appreciated by those skilled in this art that the above embodiments are intended to be illustrative, and many modifications may be made to the above embodiments by those skilled in this art, and various structures described in various embodiments may be freely combined with each other without conflicting in configuration or principle.

Although the disclosure have been described hereinbefore in detail with reference to the attached drawings, it should be appreciated that the disclosed embodiments in the attached drawings are intended to illustrate the preferred embodiments of the disclosure by way of example, and should not be construed as limitation to the disclosure.

Although several exemplary embodiments have been shown and described, it would be appreciated by those skilled in the art that various changes or modifications may be made to these embodiments without departing from the principles of the disclosure, the scope of which is defined by the claims.

It should be noted that, the word "comprise" doesn't exclude other elements or steps, and the word "a" or "an" doesn't exclude more than one. In addition, any reference numerals in the claims should not be interpreted as the limitation to the scope of the disclosure.

## Claims

1. A fixing apparatus, comprising:
a first fixing device (100) adapted to position and fix at least one first elongated element (1); and
a second fixing device (200) adapted to position and fix at least one second elongated element (2),
wherein the first fixing device (100) is formed with at least one first positioning groove (111) adapted to position the first elongated element (1), and the second fixing device (200) is formed with at least one second positioning groove (211) adapted to position the second elongated element (2); and
each first positioning groove (111) is aligned with a corresponding second positioning groove (211), so that the first elongated element (1) fixed in the first positioning groove (111) is axially aligned with the second elongated element (2) fixed in the corresponding second positioning groove (211),
and wherein
the first fixing device comprises:
a first fixing base (110) in which the first positioning groove (111) is formed;
a first pressing cover (120) pivotally connected to a side of the first fixing base (110) and adapted to be rotatable between an open state and a closed state,
**wherein**
the first fixing device (100) further comprises a lock (130) pivotally connected to the other side of the first fixing base (110) and adapted to be rotatable between a locked position and an unlocked position,
wherein the first pressing cover (120) is adapted to hold the first elongated element (1) into the first positioning groove (111) when being in the closed state;
wherein the lock (130) is adapted to lock the first pressing cover (120) in the closed state when being in the locked position,
wherein the lock (130) has a connection portion pivotally connected to the first fixing base (110) between the upper end and a lower end thereof, and
wherein the first fixing base (110) is formed with a spring receiving chamber (114) in which a first spring (140) is disposed; and
the first spring (140) is pressed against the lower end of the lock (130) at one end thereof to hold the lock (130) in the lock position.

2. The fixing apparatus according to claim 1, **characterized in that** the lock (130) is formed with a locking lip (130a) at an upper end thereof and adapted to lock an edge portion of the first pressing cover (120).

3. The fixing apparatus according to claim 1 or 2, **characterized in that** when the lock (130) is applied with a driving force (F) against a thrust of the first spring (140) at the lower end thereof, the lock (130) overcomes the thrust of the first spring (140) to be rotated from the locked position to the unlocked position to disengage the lock (130) from the first pressing cover (120).

4. The fixing apparatus according to claim 3, **characterized in that** further comprises:
a mounting base (10) on which the first fixing device (100) and the second fixing device (200) are fixedly mounted; and
an unlocking device (300) slidably mounted on the mounting base (10),
wherein the unlocking device (300) is formed with at least one pressing protrusion (320) adapted to push the lower end of the locking device (130) to drive the locking device (130) to be rotated from the locked position to the unlocked position.

5. The fixing apparatus according to claim 4, **characterized in that**
the unlocking device (300) comprises a strip-shaped body (310) on which the pressing protrusion (320) is formed; and
the mounting base (10) is formed with a receiving groove (11) into which the strip-shaped body (310) of the unlocking device (300) is slidably received.

6. The fixing apparatus according to claim 5, **characterized in that**
one of the strip-shaped body (310) and the mounting base (10) is formed with a sliding slot (311), and the other is provided with a support column (311); and
the support column (311) is received in the sliding slot (311) so that the strip-shaped body (310) is slidable back and forth along the sliding slot (311) relative to the mounting base (10).

7. The fixing apparatus according to claim 6, **characterized in that**
the unlocking device (300) further comprises a pushing portion (313) formed on one end of the strip-shaped body (310); and
when the pushing portion (313) is applied with the driving force (F) against the thrust of the first spring (140), the pushing protrusion (320) of the unlocking device (300) is moved toward the corresponding lock (130) to drive the lock (130) to be rotated from the locked position to the unlocked position.

8. The fixing apparatus according to claim 7, **characterized in that**
the strip-shaped body (310) is provided with a second spring (330) at the other end thereof, one end of the second spring is pressed against the other end of the strip-shaped body (310); and
when the driving force (F) applied to the pushing portion (313) is released, the pressing protrusion (320) of the unlocking device (300) is driven by the second spring (330) to move away from the corresponding lock (130), so that the pressing protrusion (320) of the unlocking device (300) is automatically reset to an initial state in which the pressing protrusion (320) is separated from the corresponding lock (130).

9. The fixing apparatus according to any one of claims 1 to 8, **characterized in that**
the second fixing device (200) comprises:
a second fixing base (210) in which the second positioning groove (211) is formed; and
a second pressing cover (220) pivotally connected to the second fixing base (210) and adapted to be rotated between an open state and a closed state,
wherein the second pressing cover (220) is adapted to hold the second elongated element (2) in the second positioning groove (211) when being in the closed state.

10. The fixing apparatus according to claim 9, **characterized in that** the second pressing cover (220) is formed with a handle portion (221) on a top surface thereof, by which the second pressing cover (220) is opened and closed.

11. The fixing apparatus according to any one of claims 1 to 10, **characterized in that** further comprising:
a plurality of first fixing devices (100) arranged in a row to allow a plurality of first elongate element (1) to be simultaneously positioned and fixed; and
a single second fixing device (200) having a second fixing base (210) in which a row of the second positioning grooves (211) are formed to allow a plurality of second elongated elements (2) to be simultaneously positioned and fixed.

12. The fixing apparatus according to any one of claims 1 to 11, **characterized in that**
the first elongated element (1) comprises a wire, and the first positioning groove (111) further comprises a conductor positioning groove (111') adapted to position a conductor (1') of the wire (1); and
the second elongated element (2) comprises a needle-shaped pin of an electronic device adapted to be soldered with the conductor (1') of the wire (1).

## Patentansprüche

1. Befestigungsvorrichtung, die umfasst:
eine erste Befestigungsvorrichtung (100), die dazu eingerichtet ist, mindestens ein erstes längliches Element (1) zu positionieren und zu befestigen; und
eine zweite Befestigungsvorrichtung (200), die dazu eingerichtet ist, mindestens ein zweites längliches Element (2) zu positionieren und zu befestigen,
wobei die erste Befestigungsvorrichtung (100) mit mindestens einer ersten Positionierungsnut (111) ausgebildet ist, die zur Positionierung des ersten länglichen Elements (1) eingerichtet ist, und die zweite Befestigungsvorrichtung (200) mit mindestens einer zweiten Positionierungsnut (211) ausgebildet ist, die zur Positionierung des zweiten länglichen Elements (2) eingerichtet ist; und
jede erste Positionierungsnut (111) mit einer entsprechenden zweiten Positionierungsnut (211) ausgerichtet ist, so dass das erste längliche Element (1), das in der ersten Positionierungsnut (111) befestigt ist, axial mit dem zweiten länglichen Element (2) ausgerichtet ist, das in der entsprechenden zweiten Positionierungsnut (211) befestigt ist,
und wobei
die erste Befestigungsvorrichtung umfasst:
eine erste Befestigungsbasis (110), in der die erste Positionierungsnut (111) ausgebildet ist;
eine erste Pressabdeckung (120), der schwenkbar mit einer Seite der ersten Befestigungsbasis (110) verbunden ist und dazu eingerichtet ist, zwischen einem offenen Zustand und einem geschlossenen Zustand gedreht zu werden,
**wobei**
die erste Befestigungsvorrichtung (100) ferner eine Verriegelung (130) umfasst, die schwenkbar mit der anderen Seite der ersten Befestigungsbasis (110) verbunden und dazu eingerichtet ist, zwischen einer verriegelten Position und einer entriegelten Position gedreht zu werden,
wobei die erste Pressabdeckung (120) dazu eingerichtet ist, das erste längliche Element (1) in der ersten Positionierungsnut (111) zu halten, wenn sie sich im geschlossenen Zustand befindet;
wobei die Verriegelung (130) dazu eingerichtet ist, die erste Pressabdeckung (120) im geschlossenen Zustand zu verriegeln, wenn sie sich in der verriegelten Position befindet,
wobei die Verriegelung (130) einen Verbindungsabschnitt aufweist, der schwenkbar mit der ersten Befestigungsbasis (110) zwischen dem oberen Ende und einem unteren Ende davon verbunden ist, und
wobei die erste Befestigungsbasis (110) mit einer Federaufnahmekammer (114) ausgebildet ist, in der eine erste Feder (140) angeordnet ist; und
die erste Feder (140) gegen das untere Ende der Verriegelung (130) an dessen einem Ende gedrückt wird, um die Verriegelung (130) in der Verriegelungsposition zu halten.

2. Befestigungsvorrichtung nach Anspruch 1, **dadurch gekennzeichnet, dass** die Verriegelung (130) an ihrem oberen Ende mit einer Verriegelungslippe (130a) versehen ist, die dazu eingerichtet ist, einen Randabschnitt der ersten Pressabdeckung (120) zu verriegeln.

3. Befestigungsvorrichtung nach Anspruch 1 oder 2, **dadurch gekennzeichnet, dass**, wenn die Verriegelung (130) mit einer Antriebskraft (F) gegen einen Druck der ersten Feder (140) an ihrem unteren Ende aufgebracht wird, die Verriegelung (130) den Druck der ersten Feder (140) überwindet, um von der verriegelten Position in die entriegelte Position gedreht zu werden, um die Verriegelung (130) von der ersten Pressabdeckung (120) zu lösen.

4. Befestigungsvorrichtung nach Anspruch 3, **dadurch gekennzeichnet, dass** sie des Weiteren umfasst:
eine Montagebasis (10), auf der die erste Befestigungsvorrichtung (100) und die zweite Befestigungsvorrichtung (200) fest montiert sind; und
eine Entriegelungsvorrichtung (300), die verschiebbar an der Montagebasis (10) montiert ist, wobei die Entriegelungsvorrichtung (300) mit mindestens einem Pressvorsprung (320) ausgebildet ist, der dazu eingerichtet ist, auf das untere Ende der Verriegelungsvorrichtung (130) zu drücken, um die Verriegelungsvorrichtung (130) anzutreiben, damit sie von der verriegelten Position in die entriegelte Position gedreht wird.

5. Befestigungsvorrichtung nach Anspruch 4, **dadurch gekennzeichnet, dass**
die Entriegelungsvorrichtung (300) einen streifenförmigen Körper (310) umfasst, an dem der Pressvorsprung (320) ausgebildet ist; und
die Montagebasis (10) mit einer Aufnahmenut (11) ausgebildet ist, in die der streifenförmige Körper (310) der Entriegelungsvorrichtung (300) gleitend aufgenommen wird.

6. Befestigungsvorrichtung nach Anspruch 5, **dadurch gekennzeichnet, dass**
eines aus dem streifenförmigen Körper (310) und der Montagebasis (10) mit einem Gleitschlitz (311) ausgebildet ist und das andere mit einer Stützsäule (311) versehen ist; und
die Stützsäule (311) in dem Gleitschlitz (311) aufgenommen ist, so dass der streifenförmige Körper (310) entlang des Gleitschlitzes (311) relativ zu der Montagebasis (10) hin- und hergeschoben werden kann.

7. Befestigungsvorrichtung nach Anspruch 6, **dadurch gekennzeichnet, dass**
die Entriegelungsvorrichtung (300) weiterhin einen Druckabschnitt (313) umfasst, der an einem Ende des streifenförmigen Körpers (310) ausgebildet ist; und
wenn der Druckabschnitt (313) mit der Antriebskraft (F) gegen den Druck der ersten Feder (140) beaufschlagt wird, der Druckvorsprung (320) der Entriegelungsvorrichtung (300) in Richtung der entsprechenden Verriegelung (130) bewegt wird, um die Verriegelung (130) anzutreiben, damit sie von der verriegelten Position in die entriegelte Position gedreht wird.

8. Befestigungsvorrichtung nach Anspruch 7, **dadurch gekennzeichnet, dass**
der streifenförmige Körper (310) an seinem anderen Ende mit einer zweiten Feder (330) versehen ist, wobei ein Ende der zweiten Feder gegen das andere Ende des streifenförmigen Körpers (310) gedrückt wird; und
wenn die auf den Druckabschnitt (313) ausgeübte Antriebskraft (F) aufgehoben wird, der Druckvorsprung (320) der Entriegelungsvorrichtung (300) durch die zweite Feder (330) angetrieben wird, um sich von der entsprechenden Verriegelung (130) wegzubewegen, so dass der Druckvorsprung (320) der Entriegelungsvorrichtung (300) automatisch in einen Ausgangszustand zurückgesetzt wird, in dem der Druckvorsprung (320) von der entsprechenden Verriegelung (130) getrennt ist.

9. Befestigungsvorrichtung nach einem der Ansprüche 1 bis 8, **dadurch gekennzeichnet, dass** die zweite Befestigungsvorrichtung (200) umfasst:
eine zweite Befestigungsbasis (210), in der die zweite Positionierungsnut (211) ausgebildet ist;
eine zweite Pressabdeckung (220), die schwenkbar mit der zweiten Befestigungsbasis (210) verbunden und dazu eingerichtet ist, zwischen einem offenen Zustand und einem geschlossenen Zustand gedreht zu werden,
wobei die zweite Pressabdeckung (220) dazu eingerichtet ist, das zweite längliche Element (2) in der zweiten Positionierungsnut (211) zu halten, wenn sie sich im geschlossenen Zustand befindet.

10. Befestigungsvorrichtung nach Anspruch 9, **dadurch gekennzeichnet, dass** die zweite Pressabdeckung (220) an ihrer Oberseite mit einem Griffabschnitt (221) ausgebildet ist, mit dem die zweite Pressabdeckung (220) geöffnet und geschlossen wird.

11. Befestigungsvorrichtung nach einem der Ansprüche 1-10, **dadurch gekennzeichnet, dass** sie des Weiteren umfasst:
eine Vielzahl von ersten Befestigungsvorrichtungen (100), die in einer Reihe angeordnet sind, damit eine Vielzahl von ersten länglichen Elementen (1) gleichzeitig positioniert und befestigt werden kann; und
eine einzelne zweite Befestigungsvorrichtung (200) mit einer zweiten Befestigungsbasis (210), in der eine Reihe von zweiten Positionierungsnuten (211) ausgebildet ist, um die gleichzeitige Positionierung und Befestigung einer Vielzahl von zweiten länglichen Elementen (2) zu ermöglichen.

12. Befestigungsvorrichtung nach einem der Ansprüche 1-11, **dadurch gekennzeichnet, dass**
das erste längliche Element (1) einen Draht umfasst, und die erste Positionierungsnut (111) ferner eine Leiterpositionierungsnut (111') umfasst, die dazu eingerichtet ist, einen Leiter (T) des Drahtes (1) zu positionieren; und
das zweite längliche Element (2) einen nadelförmigen Stift einer elektronischen Vorrichtung umfasst, der dazu eingerichtet ist, mit dem Leiter (1') des Drahtes (1) verlötet zu werden.

## Revendications

1. Appareil de fixation comprenant :
un premier dispositif de fixation (100) conçu pour positionner et immobiliser au moins un premier élément allongé (1),
un second dispositif de fixation (200) conçu pour positionner et immobiliser au moins un second élément allongé (2),
dans lequel le premier dispositif de fixation (100) est formé d'au moins une première rainure de positionnement (111) conçue pour positionner le premier élément allongé (1), et le second dispositif de fixation (200) est formé d'au moins une seconde rainure de positionnement (211) conçue pour positionner le second élément allongé (2), et
chaque première rainure de positionnement (111) est alignée avec une seconde rainure de positionnement (211) correspondante de sorte à ce que le premier élément allongé (1), fixé dans la première rainure de positionnement (111), soit aligné axialement avec le second élément allongé (2) fixé dans la seconde rainure de positionnement (211) correspondante,
et dans lequel
le premier dispositif de fixation comprend :
une première base de fixation (110) dans laquelle est formée la première rainure de positionnement (111),
un premier couvercle de pressage (120) relié tout en pouvant pivoter sur un côté de la première base de fixation (110) et conçu pour pouvoir tourner entre un état ouvert et un état fermé,
**dans lequel :**
le premier dispositif de fixation (100) comprend en outre un verrou relié tout en pouvant pivoter sur l'autre côté de la première base de fixation (110) et conçu pour pouvoir tourner entre une position verrouillé et une position non verrouillé,
dans lequel le premier couvercle de pressage (120) est conçu pour maintenir le premier élément allongé (1) dans la première rainure de positionnement (111) lorsqu'il est fermé,
dans lequel le verrou (130) est conçu pour verrouiller le premier couvercle de pressage à l'état fermé lorsqu'il est verrouillé,
dans lequel le verrou (130) comporte un organe de connexion relié tout en pouvant pivoter à la première base de fixation (110) entre son extrémité supérieure et son extrémité inférieure, et
dans lequel la première base de fixation (110) est doté d'un compartiment de réception de ressort (114) dans lequel est placé un premier ressort (140), et
le premier ressort (140) est comprimé contre l'extrémité inférieure du verrou (130) à une extrémité de celui-ci dans le but de maintenir le verrou (130) en position verrouillé.

2. Appareil de fixation selon la revendication 1, **caractérisé en ce que** le verrou (130) est formé d'une lèvre de verrouillage (130a) à son extrémité supérieure et il est conçu pour verrouiller un bord du premier couvercle de pressage (120).

3. Appareil de fixation selon la revendication 1 ou la revendication 2, **caractérisé en ce que** lorsque le verrou (130) reçoit une force d'entraînement (F) par rapport à la poussée du premier ressort (140) à son extrémité inférieure, le verrou (130) surmonte la poussée du premier ressort (140) pour être basculé de la position verrouillé à la position non verrouillé pour désengager le verrou (130) du premier couvercle de pressage (120).

4. Appareil de fixation selon la revendication 3, **caractérisé en ce qu'il** comprend en outre :
une base de montage (10) sur laquelle sont montés de manière fixe le premier dispositif de fixation (100) et le second dispositif de fixation (200), et
un dispositif de déverrouillage (300) monté tout en pouvant coulisser sur la base de montage (10),
dans lequel le dispositif de déverrouillage (300) est doté d'au moins une protubérance de pressage (320) conçue pour pousser l'extrémité inférieure du dispositif de verrouillage (130) afin d'entraîner en rotation le dispositif de verrouillage (130) depuis la position verrouillé jusqu'à la position non verrouillé.

5. Appareil de fixation selon la revendication 4, **caractérisé en ce que :**
le dispositif de déverrouillage (300) comporte un corps en forme de bande (310) sur lequel est formée la protubérance de pressage (320), et
la base de montage (140) est dotée d'une rainure de réception (11) dans laquelle est reçu tout en pouvant coulisser le corps en forme de bande (310) du dispositif de déverrouillage (300).

6. Appareil de fixation selon la revendication 5, **caractérisé en ce que :**
l'un du corps en forme de bande (310) et de la base de montage (10) est doté d'une encoche coulissante (311) et l'autre est doté d'une colonne de support (311), et
la colonne de support (311) est reçue dans l'encoche coulissante (311) de sorte à ce que le corps en forme de bande (310) puisse coulisser en va-et-vient le long de l'encoche coulissante (311) par rapport à la base de montage (10) .

7. Appareil de fixation selon la revendication 6, **caractérisé en ce que :**
le dispositif de déverrouillage (300) comprend en outre un organe de poussée (313) formé sur une extrémité du corps en forme de bande (310), et
lorsque l'organe de poussée (313) reçoit la force d'entraînement (F) par rapport à la poussée du premier ressort (140), la protubérance de poussée (320) du dispositif de déverrouillage (300) est entraînée en direction du verrou correspondant (130) afin d'entraîner en rotation le verrou (130) depuis la position verrouillé jusqu'à la position non verrouillé.

8. Appareil de fixation selon la revendication 7, **caractérisé en ce que :**
le corps en forme de bande (310) est doté d'un second ressort (330) à son autre extrémité, une extrémité du second ressort est pressée contre l'autre extrémité du corps en forme de bande (310), et
lorsque la force d'entraînement (F), appliquée à l'organe de poussée (313), est relâchée, la protubérance de pressage (320) du dispositif de déverrouillage (300) est entraînée par le second ressort (330) pour l'écarter du verrou correspondant (130) de sorte à ce que la protubérance de pressage (320) du dispositif de déverrouillage (300) soient ramenée automatiquement à un état initial dans lequel la protubérance de pressage (320) est séparée du verrou correspondant (130).

9. Appareil de fixation selon l'une quelconque des revendications 1 à 8, **caractérisé en ce que :**
le second dispositif de fixation (200) comprend :
une seconde base de fixation (210) dans laquelle est formée la seconde rainure de positionnement (211), et
un second couvercle de pressage (220) relié tout en pouvant pivoter à la seconde base de fixation (210) et conçu pour être basculé entre un état ouvert et un état fermé,
dans lequel le second couvercle de pressage (220) est conçu pour maintenir le second élément allongé (2) dans la seconde rainure de positionnement (211) lorsqu'il est fermé.

10. Appareil de fixation selon la revendication 9, **caractérisé en ce que** le second couvercle de pressage (220) est doté d'une poignée (221) sur sa surface supérieure grâce à laquelle est ouvert et fermé le second couvercle de pressage (220).

11. Appareil de fixation selon l'une quelconque des revendications 1 à 10, **caractérisé en ce qu'il** comprend en outre :
une pluralité de premiers dispositifs de fixation (100) disposés en une rangée afin de pouvoir positionner et fixer simultanément une pluralité de premiers éléments allongés (1), et
un second dispositif de fixation (200) unique précédentes base de fixation (210) dans laquelle est formée une rangée des secondes rainures de positionnement (211) afin de pouvoir positionner et fixer simultanément une pluralité de seconds éléments allongés (2).

12. Appareil de fixation selon l'une quelconque des revendications 1 à 11, **caractérisé en ce que :**
le premier élément allongé (1) comprend un fil et la première rainure de positionnement (111) comprend en outre une rainure de positionnement de conducteur (111') conçue pour positionner un conducteur (1') du fil (1), et
le second élément allongé (2) comprend une broche en forme d'épingle d'un composant électronique conçue pour être soudée avec le conducteur (1') du fil (1).
